# EUROPEAN PATENT APPLICATION

(11) **EP 4 240 107 A1**
(43) Date of publication of application: **06.09.2023**
(21) Application number: 22159840.2
(22) Date of filing: 02.03.2022
(51) Int. Cl.: H05B 6/06

(54) **METHOD OF CONTROLLING A SWITCHING CONVERTER AND RELATED INDUCTION COOKTOP**

(71) Applicant: Whirlpool Corporation, Benton Harbor, MI 49022 (US)
(72) Inventor: Baldo, Salvatore, 21024 Cassinetta di Biandronno (VA) (IT); Gallivanoni, Andrea, 21024 Cassinetta di Biandronno (VA) (IT); Pastore, Cristiano Vito, 21024 Cassinetta di Biandronno (VA) (IT); Zoppi, Andrea, 21024 Cassinetta di Biandronno (VA) (IT)
(74) Representative: Spina, Alessandro

(57) **Abstract**

The ticking noise that can be heard when a switching converter is operated to deliver a power level smaller than the minimum power level for having a soft-switching is due to the fact that during the OFF interval there is no power delivery and the DC-bus capacitance is charged at the peak of rectified mains line voltage.

This drawback may be overcome by disconnecting from the input AC terminals the DC-bus to prevent it from being charged, so as the DC voltage is null or smaller than a minimum nominal value when a next ON time interval T₁ begins.

## Description

### TECHNICAL FIELD

The present disclosure relates to voltage converters and more in particular to methods of controlling a switching converter usable for realizing induction cooktops and for induction heating items of cookware placed above a heating coil powered by the switching converter.

### BACKGROUND

Cooking appliances, in particular induction cooking appliances, are known from the prior art which have at least one main switching converter to supply induction heating elements with a supply voltage through actuation of a main energy supply, and an energy storage unit, in particular a bus capacitor, which is provided in particular for signal smoothing through the charging of an energy storage unit with a charge potential. Different topologies of switching converter, such as for example half-bridge or full-bridge switching converters, may be used as AC current generators for induction cooktops. When properly designed and matched with their load, switching converters are known to operate in the so called "soft-switching" mode, which consists in having the switching device commutating when either the voltage across it and/or the current flowing through it are null.

A particular class of converters are the so-called quasi-resonant (QR) converters, also called Single Ended converters. They are particularly attractive because they use just one solid state switch and only one resonant capacitor to generate a variable frequency/variable amplitude current to feed the induction coil.

In that sense QR converters are the best compromise between cost and energy conversion efficiency.

Given that QR converters are widely used in induction cooktops, the addressed technical problem will be illustrated referring to this particular topology of converters, though the same drawbacks arise with any kind of switching converter (for example half-bridge or full-bridge converters) used for powering heating coils of induction cooktops.

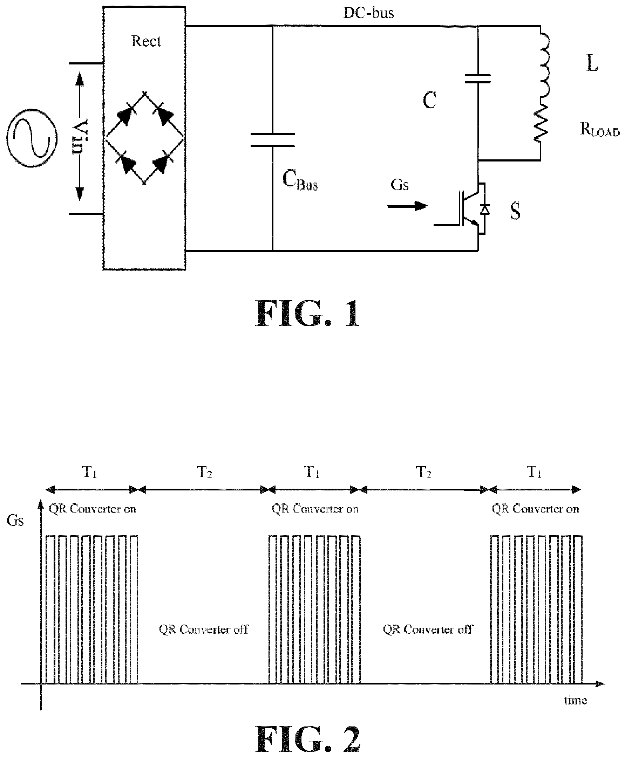

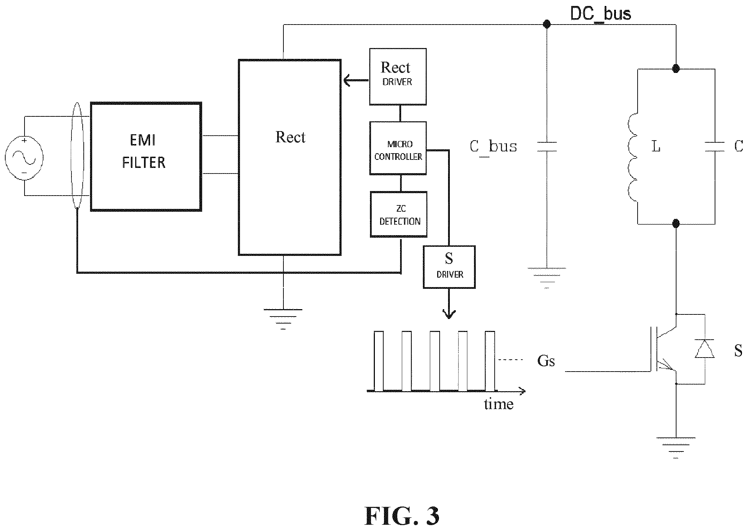

Examples of QR converters are shown in figures 1 and 3. Basically, a QR converter comprises:
- a rectifier stage Rect having input AC terminals, for receiving an AC voltage to be rectified, and a DC-bus having a high-side line for making available a DC voltage on the DC-bus between the high-side line and the low-side line, wherein the DC voltage is generated as a rectified replica of the AC voltage received at the input AC terminals;
- an output stage connected between the high-side line and the low-side line configured to be supplied with said DC voltage on said DC-bus, comprising:
   - a L-C resonant pair connected between the high-side line and an intermediate node, configured to be magnetically coupled with a load. For example, the inductor L of the L-C resonant pair may be the heating coil of an induction cooktop, and the capacitive component C of the resonant pair may be a capacitor dimensioned to determine a resonance frequency of the L-C resonant pair,
   - a controlled output switch S connected in series with the L-C resonant pair between the intermediate node and the low-side line;
- a control unit (not shown) configured to turn on/off the controlled output switch S. The QR converter of figure 3 comprises an optional electromagnetic interference filter, in order to prevent electromagnetic interference from the power converter.

Like the QR converters, other switching converters suitable for being used in induction cooktops essentially comprise the rectifier stage Rect, the output stage with at least one inductor (optionally the output stage may include also a tank capacitor connected to the inductor to form a L-C resonant pair), and at least one controlled output switch connected between the intermediate node and either the low-side line or the high-side line, configured to connect or disconnect the inductor to the DC-bus for being charged by the switching converter or for being discharged.

A drawback of QR converters lies in the very narrow range of output power being achievable in the Soft-Switching regime. In particular, when the output power being regulated falls below a given limit, the inverter fails in operating in soft switching mode, leading to a dramatic and unmanageable increase in thermal losses (hard switching) and Electromagnetic Interference (a.k.a. EMI). Those limitations lead to a relatively low regulation range, which is defined as the ratio between maximum achievable power (limited by maximum voltage across the switch) and the minimum achievable power (limited by the losses for hard switching at turn on).

This situation becomes an issue especially when the user wants to supply low power to the pan.

The simplest mode for overcoming the aforementioned limitation for switching converters is to operate the inverter in the so-called burst-mode or ON-OFF mode (as shown in Fig. 2), consisting in operating the converter for some amount of time T₁, during which several charging phases and discharging phases occur, at the minimum power level adjustable according to ZVS conditions, and switching it off for another amount of time T₂. By cyclically alternating over time the two intervals, the average power delivered to the load can be calculated by multiplying the duty ratio T₁/(T₁ + T₂) by the minimum power limit (the minimum settable power in ZVS mode).

For example, if a user wants to supply 100 W and the minimum power to have low soft switching is 700 W, the system must operate in the so-called ON / OFF mode, in which the 700 W are supplied for a short time interval T₁, and for the remainder of the time interval T₂ the converter is kept off, to obtain an average power delivery of 100 W. In this functioning mode, two annoying things happen:
- a ticking acoustic noise from the pan is produced;
- the output switch S produces a large amount of dissipated power (high hard-switching) at the first activation after the T₂ interval. This stress is often outside of the SOA (Safe Operating Area) allowed by the device itself.

Another situation where ticking noise occurs is during the so-called "pan detection" operation, that is when the presence of a cooking vessel on an induction heating cooktop is detected. Typically, the detection of the cooking utensil is accomplished by feeding power to the induction heating coils and by assessing at least an electrical parameter of the QR converters of the induction heating cooktop which is modified when a cooking utensil is placed on one or more induction coils.

### SUMMARY

During operation of a switching converter, it is not infrequent that a ticking acoustic noise is generated, for example when the converter is delivering to the cooking utensil a power lower than the minimum power required for the converter to operate in the soft-switching mode. In this situation, and other similar conditions, there is a large amount of energy transferred to the cooking utensil in a short interval of time, such interval being comparable to the switching time of the controlled output switch S of the output stage. For example, this can happen when the DC-bus capacitance is charged at the peak of the rectified mains line voltage (e.g. 325 V for nominal RMS line voltage of 230 V), and the controlled output switch S is turned on for the first time after a long period of being kept off. For example, if the converter is kept inactive for at least 10 ms, the first time it is turned on again after that period has elapsed this situation will occur. In those same conditions, there is also a large amount of power dissipation occurring in the output switch S, the so-called hard-switching condition. Obviously, this problem also occurs every time the output switch S is turned ON for the first time, after the main relay closure.

Given that one method to perform a pan detection operation is to stimulate the induction coils with short PWM pulses, and record the value of the electrical parameter of the converter, if the pan detection is operated when the DC-bus is charged, as explained in the previous paragraph, this would typically cause the annoying noise to be produced. Tests carried out by the Applicant have shown that the same drawback occurs also in induction cooktops with a different type of switching converters. Therefore, it is believed that the above inconvenience is not tied to the topology of QR converters but it affects any type of switching converter.

At least part of these drawbacks are overcome according to this disclosure by discharging purposely the DC-bus during an OFF interval of the switching converter so as the DC-bus is substantially discharged when a new ON interval of the switching converter is started.

This objective is at least partially achieved using the method defined in claim 1.

According to an aspect, a switching converter of this disclosure may have a rectifier stage RECT comprising SCRs, and may have a control line that senses zero-crossing conditions of the AC input voltage and turns on the SCRs of the rectifying stage only when power is to be supplied to the load.

The present invention has two technical advantages, as compared to the prior art:
1) it eliminates the occurrences of the ticking noise, thus resulting in a more pleasing experience for the user;
2) it reduces the power dissipation on the controlled output switch S, thereby increasing its useful life, resulting in a more reliable product, that is less subject to failures.

The disclosed methods may be used for controlling any kind of switching converters suitable for powering a heating coil of an induction cooktop and are not univocally destined for controlling QR converters.

Switching converters adapted for induction cooktops and a related induction cooktop are also disclosed.

Preferred embodiments are defined in the annexed claims.

### BRIEF DESCRIPTION OF THE DRAWINGS

Figure 1 is a basic circuit diagram of a quasi resonant (QR) converter powering a load connected to the rectifying stage through a controlled output switch.
Figure 2 depicts a time graph of the control signal of the output switch of the QR converter of figure 1 when the power to be supplied to the load is smaller than a minimum power value for having a soft switching.
Figure 3 is a circuit diagram of a quasi resonant (QR) converter with a controlled rectifier stage driven according to a method of this disclosure.
Figure 4 is a circuit diagram of a quasi resonant (QR) converter with a control line that controls the SCR of the controlled rectifier stage according to a method of this disclosure.
Figure 5 is a circuit diagram of a half-bridge switching converter with a controlled rectifier stage driven according to a method of this disclosure.
Figure 6 is a circuit diagram of a half-bridge switching converter with a control line that controls the SCR of the controlled rectifier stage according to a method of this disclosure.
Figure 7 is a time graph of the control signals for turning on the SCRs of the rectifying stage, of the control pulses applied to the output switch for powering the supplied load and of the main signals of the switching converter of figure 4 during OFF phases and ON phases.

### DESCRIPTION OF EXEMPLARY EMBODIMENTS

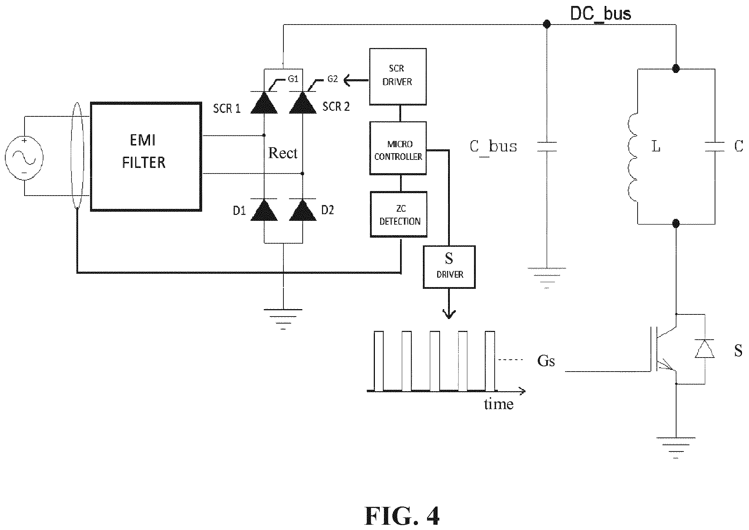

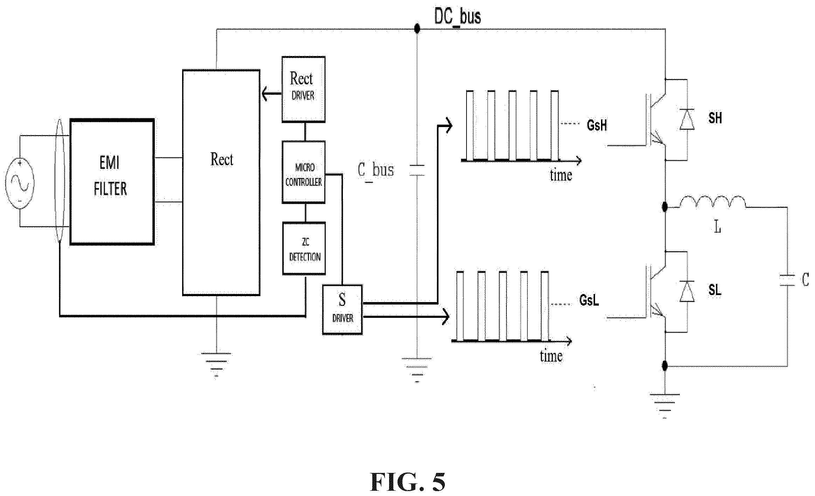

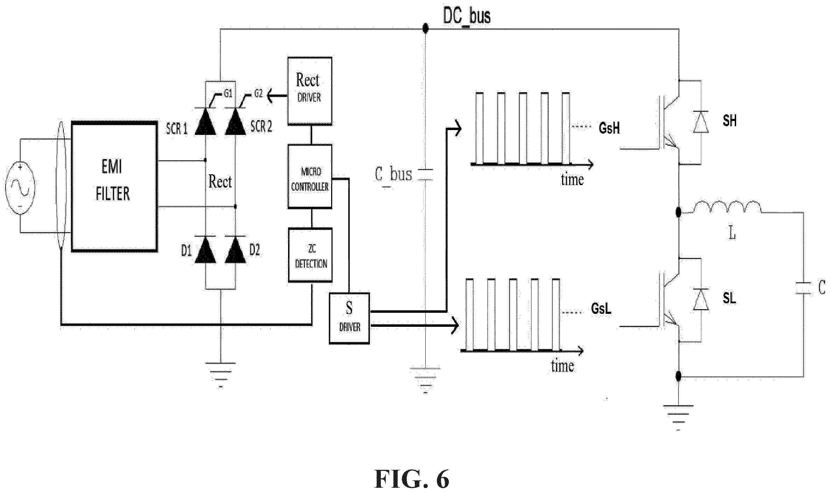

A switching converter, that may be for example a QR converter depicted in figures 3 and 4, or a half-bridge switching converter of figures 5 and 6, or a full-bridge switching converter (not shown in the figures), may be controlled so as to prevent the generation of the ticking noise that can be heard when the converter is operated to deliver a power level smaller than the minimum power level for having a soft-switching, or when a "pan detection" operation is carried out before powering the induction coil(s) surmounted by a cooking utensil. This may be done by carrying out, before an ON time interval T₁ of the converter begins during which a load coupled with the inductor L is powered by the converter, the step of operating on/off the controlled rectifier stage RECT of the converter so as to prevent the DC voltage on the capacitance Cbus of the DC-bus between the high-side line and the low-side line from increasing during the OFF time intervals T₂, in order to keep the DC voltage below a minimum nominal value, at which the above discussed drawbacks are practically negligible. By preventing the capacitance Cbus of the DC-bus from being charged during the OFF interval T₂, the DC voltage is substantially null when the ON time interval T₁ begins and thus a soft-switching, or a "low hard-switching" (i.e. a hard-switching with a relatively small voltage on the output switch S of figure 3, or on the high-side output switch SH of figure 5) is performed because the voltage across the controlled output switch S (SH; SL) is at most equal to said minimum nominal value when the output switch S (SH; SL) is turned on.

The switching converters of figures 3 and 5 have a controlled rectifier stage RECT configured to be switched in order to charge the DC-bus or to keep it disconnected from the supply line. Such a controlled rectifier stage may be realized for example using a controlled half-bridge stage, or using a controlled full-bridge stage, or more generally using controlled switches configured to rectify the input voltage and connect/disconnect the DC-bus to the supply line on which the input voltage is made available. According to the present disclosure, when an ON time interval T₁ of the switching converter ends during which a load coupled with the inductor L is powered by the switching converter, the controlled rectifier stage is operated to disconnect from the input AC terminals the DC-bus and to prevent it from being charged, so as the DC voltage between the high-side line and the low-side line of the DC-bus is null or smaller than a minimum nominal value when the next ON time interval T₁ begins.

In the shown embodiments, there is also an optional capacitor C connected to the inductor L in order to form a L-C resonant pair. In general, the capacitor C may be omitted in all those topologies of switching converters that do not require a L-C resonant pair.

According to an aspect, the start of each ON time interval T₁ is set to approximately coincide with the zero crossing of the mains line voltage, as detected by the zero-cross detection block ZC DETECTION. A microcontroller MICROCONTROLLER, which controls also the driver S DRIVER of the output switch S, receives a zero-crossing signal from the ZC DETECTION block and commands the driver of the rectifier stage RECT DRIVER, which drives the controlled rectifier stage in order to turn it on, so that the DC-bus is charged. When an OFF time interval T₂ begins, the controlled rectifier stage RECT DRIVER is turned off by the driver RECT DRIVER in order to disconnect the DC-bus from the supply line, preventing the DC-bus from being charged and thus keeping null or negligible the DC voltage available thereon.

Preventing the capacitance of the DC-bus from being charged before powering the load, is an efficient technique for avoiding the generation of the ticking noise when the switching converter is operated by periodically alternating ON time intervals T₁, during which a load coupled with the inductor L is powered by the converter, to OFF time intervals T₂, during which the load is not powered by the converter and the inductor L is left discharging. The ticking noise is typically generated when the converter is operated to deliver an average power smaller than the minimum power that can be delivered to the load while maintaining the output switch S (SH; SL) in soft-switching operation.

In these situations, shown for example in Fig. 2, during ON time intervals T₁ the controlled output switch S is driven on/off at a nominal switching frequency of the converter and with a duty-cycle corresponding to said minimum power, whereas during OFF time intervals T₂ the controlled output switch S (SH; SL) is kept off, wherein a duration of an ON time interval T₁ and a duration of a subsequent OFF time interval T₂ are adjusted so as an average power delivered to the load is a fraction of the minimum power.

According to an exemplary aspect of this disclosure, a switching converter may be realized as shown in figures 4 and 6, with:
- a controlled rectifier stage Rect comprising a rectifying bridge containing at least two controlled switches (for example two SCRs SCR1, SCR2 controlled by respective gate trigger pulses G1, G2) disposed to rectify respectively, when activated, a positive and a negative half-wave of the AC voltage; and
- a driver SCR DRIVER of the controlled switches of the rectifier stage Rect.

The other components are as in figure 3 and 5 and have the same name.

Such a controlled rectifier stage Rect can be realized using controlled components such as, for example, SCRs, GTOs, solid state transistors, relays, IGBTs, and other components. Most advantageously, the controlled rectifier stage is implemented using two solid state diodes and two SCRs, as shown in figures 4 and 6.

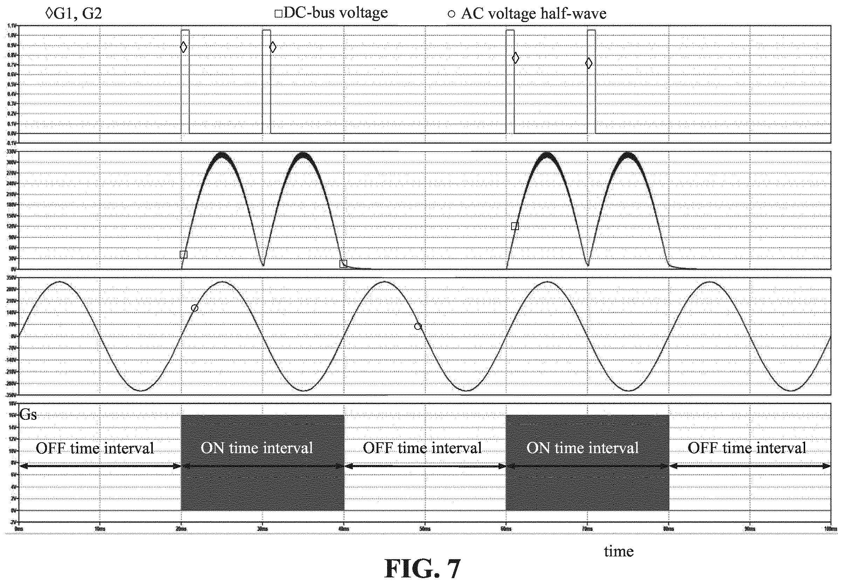

Fig. 7 shows an example of operation of the switching converter depicted in figure 4 and 6. In particular, Fig. 7 relates to a condition in which at the start of the shown operating phase the DC-bus is not charged, i.e. the voltage across the capacitance C-bus is null. In this condition, the controller starts with an OFF time interval. During this time, the SCRs SCR1 and SCR2 are kept turned off, so that the DC-bus is not charged. As a result, at the end of the first OFF time interval shown, when an ON time interval begins, the DC-bus is not charged, and the controlled output switch S can be operated in a soft-switching condition.

The start of each ON time interval is set to approximately coincide with the zero crossing of the mains line voltage, as detected by the ZC DETECTION block. At this time, the system will activate the SCR DRIVER circuit in order to turn on the SCRs SCR1 and SCR2, so that the voltage rectifier Rect behaves as a traditional diode bridge rectifier, and the DC-bus is charged. This operation has to be repeated for every zero-crossing event occurring during the ON time interval.

Due to the normal operation of the converter, after the peak of the mains line voltage, the DC-bus will naturally be discharged, in a manner well known in the art, until the voltage across the capacitance Cbus of the DC-bus reaches almost zero in the vicinity of the subsequent zero crossing of the mains line voltage.

The beginning of each OFF time interval is also set to approximately coincide with the zero crossing of the mains line voltage, as detected by the ZC DETECTION block.

Starting from the beginning of an OFF time interval, and for the whole duration of said OFF time interval, the SCRs of the rectifier stage Rect are kept off and thus the DC-bus cannot charge: when the subsequent ON time interval begins, the DC voltage on the DC-bus - and thus on the current terminals of the output switch S (SH; SL) - is practically null and a soft-switching or a "low hard-switching" is performed. This avoids charging the bus capacitance in the time intervals where the system does not intend to deliver power to the cooking implement. In fact, what is described in this aspect of the present invention is not a method for discharging the DC-bus capacitance Cbus but it is a method for not charging it at all when not needed. However, this method cannot be used for silent pan detection (because the energy of the pan detection pulse is not enough to discharge the capacitance Cbus) but only at the beginning and during the power delivery. The rectifier stage in this case may be formed by two discrete low side diodes D1, D2 and two discrete high side controlled switches, for example the SCRs labelled SCR1, SCR2, that are turned on by the respective gate trigger signals G1, G2. Referring to the exemplary time graphs of figure 7, between 0 and 20 ms the DC-bus voltage is zero and there is no power delivery. At 20 ms the SCRs are turned on and simultaneously the power delivery starts (the signal Gs turns on/off the controlled output switch S). For each half wave in which power delivery is requested, the SCRs will be turned on approximately in correspondence to the zero crossing. To terminate the power delivery, the PWM signal Gs is disabled at the end of the AC voltage half-wave, when the DC-bus capacitance Cbus is completely discharged due to the normal operation of the converter during power delivery; it will be necessary to turn on again the SCRs to recharge the capacitance Cbus during the next power delivery phase.

The switching converters presented above may be used to realize an induction cooktop, for heating an item of cookware, by using an induction heating coil as the inductive component L depicted in the figures from 3 to 6, configured to be magnetically coupled with the item of cookware to be heated.

## Claims

1. A method of controlling a switching converter, said switching converter comprising:
- a controlled rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- an output stage connected between said high-side line and said low-side line configured to be supplied with said DC voltage on said DC-bus, comprising:
- at least one inductor (L) connected at an intermediate node of the output stage, wherein said at least one inductor being configured to be magnetically coupled with a load,
- at least one controlled output switch (S; SH; SL) connected between said intermediate node and either said low-side line or said high-side line, configured to connect or disconnect said at least one inductor to said DC-bus for charging said inductor (L) by said switching converter or for discharging said inductor (L);
- a control unit (MICROCONTROLLER) configured to turn on/off said at least one controlled output switch (S; SH; SL);
said method comprising the following steps:
when an ON time interval (T₁) of the switching converter ends, during which a load coupled with said at least one inductor is powered by the switching converter, operating said rectifier stage (Rect) to disconnect from said input AC terminals said DC-bus between said high-side line and said low-side line to prevent said DC-bus from being charged, so as said DC voltage is null or smaller than a minimum nominal value when a next ON time interval (T₁) begins.

2. The method of claim 1, comprising the following steps:
providing and installing a rectifier stage (Rect) comprising a rectifying bridge (SCR1, SCR2, D1, D2) containing at least two controlled switches (SCR1, SCR2) disposed to rectify respectively, when activated, a positive and a negative half-wave of the AC voltage;
sensing zero-crossings of the AC voltage and generating a respective zero-cross signal;
during said ON time interval, generating for each controlled switch (SCR1; SCR2) of said two controlled switches (SCR1, SCR2) a respective trigger pulse (G1, G2) in function of said zero-crossings so as to generate said DC voltage as a rectified replica of the AC voltage;
during said OFF time interval, keeping in an off state said at least two controlled switches (SCR1, SCR2).

3. The method of claim 1 or 2, further comprising the steps of:
periodically alternating ON time intervals (T₁) of the switching converter, during which a load coupled with said at least one inductor is powered by the switching converter, to OFF time intervals (T₂) of the switching converter, during which said load is not powered by the switching converter;
during said ON time intervals (T₁) of the switching converter, driving on/off said controlled output switch (S; SH; SL) at a nominal switching frequency of the switching converter and with a duty-cycle corresponding to a minimum power to be delivered to the load by the switching converter to perform a soft-switching of said controlled output switch, wherein a duration of an ON time interval of said ON time intervals (T₁) and a duration of a subsequent OFF time interval of said OFF time intervals (T₂) are adjusted so as an average power delivered to said load is a fraction of said minimum power.

4. A method of induction heating an item of cookware with an induction cooktop, comprising the steps of:
providing and functionally installing in an induction cooktop a switching converter, said switching converter comprising:
- a controlled rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- an output stage connected between said high-side line and said low-side line configured to be supplied with said DC voltage on said DC-bus, comprising at least:
- at least one inductor connected at an intermediate node of said output stage, wherein said at least one inductor being configured to be magnetically coupled with said item of cookware,
- at least one controlled output switch (S; SH; SL) connected between said intermediate node and either said low-side line or said low-side line, configured to connect or disconnect said at least one inductor to said DC-bus for charging said inductor by said switching converter or for discharging said inductor;
- a control unit (MICROCONTROLLER) configured to turn on/off said at least one controlled output switch (S; SH; SL);
powering said induction cooktop carrying out the method of controlling said switching converter according to one of claims from 1 to 3.

5. A switching converter, comprising:
- a controlled rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- an output stage connected between said high-side line and said low-side line configured to be supplied with said DC voltage on said DC-bus, comprising at least:
- at least one inductor (L) connected at an intermediate node, wherein said at least one inductor being configured to be magnetically coupled with a load,
- at least one controlled output switch (S; SH; SL) connected between said intermediate node and either said low-side line or said high-side line, configured to connect or disconnect said at least one inductor (L) to said DC-bus for charging said inductor (L) by said switching converter or for discharging said inductor (L);
- a control unit (MICROCONTROLLER) configured to turn on/off said controlled output switch (S; SH; SL),
**characterized in that**
said control unit (MICROCONTROLLER) is further configured, when an ON time interval (T₁) of the switching converter ends during which a load coupled with said at least one inductor is powered by the switching converter, to operate said rectifier stage (Rect) to disconnect from said input AC terminals said DC-bus between said high-side line and said low-side line to prevent said DC-bus from being charged, so as said DC voltage is null or smaller than a minimum nominal value when a next ON time interval (T₁) begins.

6. The switching converter of claim 5,
**characterized in that**
said controlled rectifier stage (RECT) comprises a rectifying bridge (SCR1, SCR2, D1, D2) comprising at least two controlled switches (SCR1, SCR2) disposed to rectify respectively, when activated, a positive and a negative half-wave of the AC voltage;
said switching converter further comprises a zero-cross circuit block (ZC DETECTION) configured to sense zero-crossing of the AC voltage and to generate a respective zero-cross signal;
wherein said control unit is further configured, during said ON time interval (T₁), to generate for each controlled switch (SCR1; SCR2) of said two controlled switches (SCR1, SCR2) a respective trigger pulse in function of said zero-cross signal in order to generate said DC voltage as a rectified replica of the AC voltage, and is configured to, during said OFF time interval (T₂), keep in an off state said at least two controlled switches (SCR1, SCR2).

7. The switching converter of claim 5 or 6, wherein said switching converter is a quasi-resonant converter and said output stage further comprises a tank capacitor (C) coupled with said at least one inductor (L) to constitute a L-C resonant pair, wherein said L-C resonant pair is connected between said high-side line and said intermediate node, and said controlled output switch (S) is connected in series with said L-C resonant pair between said intermediate node and said low-side line.

8. The switching converter of claim 5 or 6, wherein said output stage comprises a high-side controlled output switch (SH) connected between said high-side line and said intermediate node, and comprises a low-side controlled output switch (SL) connected between said intermediate node and said low-side line, wherein said at least one inductor (L) is connected between said low-side line and said intermediate node.

9. The switching converter of claim 8, wherein said output stage further comprises a tank capacitor (C) connected in series with said at least one inductor (L) to constitute a L-C resonant pair, wherein said L-C resonant pair is connected between said low-side line and said intermediate node.

10. An induction cooktop, comprising a switching converter as defined in one of claims 5 to 9.
